Europäisches Patentamt

European Patent Office

Office européen des brevets

(11) Veröffentlichungsnummer: **0 654 498 A2**

## (12) EUROPÄISCHE PATENTANMELDUNG

(21) Anmeldenummer: **94117841.0**

(22) Anmeldetag: **11.11.94**

(51) Int. Cl.6: **C08K 7/00**, C08L 21/00

(30) Priorität: **24.11.93 DE 4339984**

(43) Veröffentlichungstag der Anmeldung:
**24.05.95 Patentblatt 95/21**

(84) Benannte Vertragsstaaten:
**DE ES FR GB IT**

(71) Anmelder: **RHEIN-CHEMIE RHEINAU GmbH**
**Düsseldorfer Strasse 23-27**
**D-68219 Mannheim (DE)**

(72) Erfinder: **Loix, René, Dr.**
**Wölfelweg 8**
**D-69181 Leimen (DE)**
Erfinder: **Graf, Hans-Joachim, Dr.**
**Billingstrasse 14**
**D-68219 Mannheim (DE)**
Erfinder: **Kleinknecht, Harald, Dipl.-Ing.**
**Ernst-Reuter-Strasse 12**
**D-55232 Alzey (DE)**

(74) Vertreter: **Gremm, Joachim, Dr. et al**
**Bayer AG**
**Konzernverwaltung RP**
**Patente Konzern**
**D-51368 Leverkusen (DE)**

(54) Kautschukchemikalienzubereitung.

(57) Kautschukchemikalienzubereitung, bestehend aus oder enthaltend Kautschukchemikalien in feinverteilter Form und eine Trägerflüssigkeit, worin die Kautschukchemikalienteilchen einen mittleren Durchmesser (Gewichtsmittel $d_{50}$) von 2 $\mu$m bis 20 $\mu$m, vorzugsweise <10 $\mu$m, besitzen und eine Teilchendurchmesserverteilung entsprechend $\delta d_{10}$-$d_{90}$< = 20 $\mu$m, vorzugsweise <10 $\mu$m, aufweisen.

EP 0 654 498 A2

Kautschukchemikalien sind meist feste Stoffe, die Kautschukmischungen zugesetzt werden, um ihre Eigenschaften zu verändern und ihre Vernetzung (Vulkanisation) zu bewirken. Es handelt sich also zum Beispiel um Vulkanisationsmittel, Vulkanisationsbeschleuniger, Füllstoffe, Ruße, Antioxidantien, Weichmacher, Kautschukstrecköle und ähnliche Zuschläge. Kautschukchemikalien werden meist auf Kautschukwalzen oder in Innenknetern in die Kautschukmischung eingearbeitet, wobei möglichst homogene Verteilung erforderlich ist. Feststoffe müssen also in möglichst feiner Verteilung vorliegen, d.h. als Pulver, so daß beim Einarbeiten eine erhebliche Staubbelästigung eintritt.

Man hat viele Methoden entwickelt, um Kautschukchemikalien besser handhaben zu können. So hat man pulverförmige Zusätze brikettiert oder mit Öl gebunden oder auch mit Polymeren. Als Polymere hat man thermoplastische Kunststoffe verwendet, aber auch Produkte wie Faktis, die selbst Kautschukadditive sind. Alle diese Zubereitungen sind, obwohl sie einen erheblichen Fortschritt gegenüber dem Einarbeiten von Kautschukhilfsmittelpulvern darstellen, noch nicht völlig zufriedenstellend. Ein Grund dafür ist die zu große Bandbreite der Durchmesser der Kautschukchemikalienteilchen und die Agglomeration der Teilchen. Diese Durchmesser reichen von etwa 1 mm bis zu Staubanteilen mit Durchmessern unter 2 $\mu$m.

Gegenstand der Erfindung sind Kautschukchemikalienzubereitungen, z.B. Pasten von Kautschukchemikalien in feingemahlener Form in einer Trägerflüssigkeit, worin die Kautschukchemikalienteilchen einen mittleren Durchmesser (Gewichtsmittel $d_{50}$) von 5 $\mu$m bis 30 $\mu$m besitzen und eine sehr enge Teilchendurchmesserverteilung entsprechend $\Delta d_{10}$-$d_{90}$< = 20 $\mu$m und keine Teilchen >50, vorzugsweise keine Teilchen >30 $\mu$ aufweisen.

Mit $d_{50}$ ist der Teilchendurchmesser gemeint oberhalb dessen und unterhalb dessen die Durchmesser von jeweils 50 Gew.-% der Teilchen liegen; $d_{10}$ ist der Durchmesser oberhalb dessen 10 Gew.-% und unterhalb dessen 90 Gew.-% der Teilchen liegen und $d_{90}$ der Durchmesser oberhalb dessen 90 Gew.-% und unterhalb dessen 10 Gew.-% der Teilchen liegen. $\Delta d_{10}$-$d_{90}$ ist die Differenz dieser beiden Werte und stellt ein Maß für die Verteilungsbreite dar. Je kleiner diese Differenz um so enger ist die Teilchendurchmesserverteilung.

Die erfindungsgemäßen Kautschukchemikalienzubereitungen enthalten im allgemeinen 10 bis 80 Gew.-%, vorzugsweise 40 bis 60 % Kautschukchemikalien und 90 bis 20 Gew.-% Trägerflüssigkeit. Sie sind im allgemeinen pastenförmig, können aber auch fest oder flüssig sein, je nach Menge der eingearbeiteten Kautschukchemikalien.

Kautschukchemikalien im Sinne dieser Erfindung sind insbesondere Beschleuniger, Vernetzungsmittel, ASM, Aktivatoren, Stabilisatoren.

Als Trägerflüssigkeiten kommen in erster Linie synthetische Weichmacher, z.B. Ester, Alkohole, epoxidierte Öle, Mineralöl, flüssige Pulver, flüssige ASM und Abmischungen davon in Betracht.

Zur Herstellung der erfindungsgemäßen Kautschukchemikalienzubereitungen können zunächst die Kautschukchemikalien vorzerkleinert und dann mit der Trägerflüssigkeit gemischt werden. Die Mischung wird dann gemahlen, z.B. in einer Perlmühle.

## Prinzip Perlmühle

Die Mühle besteht aus einem Mahlbehälter, der mit einer großen Zahl von kleinen Kugeln gefüllt ist.

Die Kugelgröße und der Materialtyp kann je nach Anforderungen an die Mahlung variieren, z.B. Ø 0,3-10 mm. Das Material kann z.B. Glas, Keramik, Metall sein.

Der Mahlbehälter kann zusätzlich ein Rührwerk enthalten.

Im allgemeinen ist das Aggregat kühlbar.

Die separat vorbereitete Mischung der Kautschukchemikalie(n) mit der Trägerflüssigkeit wird dem Mahlbehälter z.B. über eine Pumpe, Schnecke dem Mahlbehälter zugeführt.

Die durch den Produktstrom und das Rührwerk in Bewegung versetzten Perlen zerreiben vorzugsweise grobere Primärteilchen und Agglomerate und homigenisieren das Gemisch.

Bisher hat man die (festen) Kautschukchemikalien zuerst gemahlen und dann die erhaltenen Pulver weiterbehandelt. Erfindungsgemäß geht man wie oben dargelegt so vor, daß man die festen Stoffe in Anwesenheit der Trägersubstanz mahlt. Dabei entstehen Kautschukchemikalienteilchen der gewünschten Größe, die sich direkt in der Trägerflüssigkeit dispergieren. Es wird auch eine besonders gute Benetzung der Oberfläche dieser Teilchen durch die Trägerflüssigkeit erreicht, so daß eine Reagglomeration der Teilchen verhindert wird.

**Beispiele**

**Beispiel 1**

| Weichmacher Mesamoll (Alkylsulfonsäureester des Phenols) | 50 Tle. |
|---|---|
| Benzothiazyl-cyclohexyl-sulfenamid (CBS) | 50 Tle. |

Das CBS-Pulver wird mit einem Dissolver in das Mesamoll eingemischt. Die vorliegende Paste wird in einer Perlmühle vermahlen.

**Parameter Dissolver:**

| U min$^{-1}$ | 3265 |
|---|---|
| End-Temperatur (°C) | 28 |
| Einmischzeit (min) | 5 |

**Parameter Perlmühle:**

| U min$^{-1}$ | 1000 |
|---|---|
| Mahlperlen Ø mm | 1,2 |
| Füllgrad Perlen (%) | 80 |
| Kühlung | an |
| Mahlgut-Temperatur (°C) | 54 |

**Teilchengrößenbestimmung prozentuale Verteilung der Teilchen**

## Optische Auswertung mit Mikroskop

|  | -2 | -5 | -10 | -20 | -30 | -40 | -50 | -80 | -100 | -200 | -500 | -1000 | -2000 µm |
|---|---|---|---|---|---|---|---|---|---|---|---|---|---|
| CBS-Pulver aufge-schlämmt im Weich-macher | 10 | 40 | 20 | 10 | 8 | 8 | 3 | 0,2 | 0,2 | - | - | 0,1 | - |
| Abmischung nach Dissolver | 10 | 40 | 20 | 10 | 8 | 7 | 4 | 0,2 | 0,2 | - | - | - | - |
| Abmischung nach Mahlung | 20 | 40 | 30 | 5 | 5 | - | - | - | - | - | - | - | - |

**Beispiel 2**

| Zinkdibenzyldithiocarbamat Pulver (ZBEC) | 50 Tle. |
|---|---|
| Mesamoll (Alkylsulfonsäure des Phenols) | 50 Tle. |

Das ZBEC-Pulver wird mit einem Dissolver in das Mesamol eingemischt. Die vorliegende Paste wird in einer Perlmühle vermahlen.

**Parameter Dissolver:**

| U min$^{-1}$ | 3265 |
|---|---|
| End-Temperatur (°C) | 29 |
| Einmischzeit (min) | 5 |

**Parameter Perlmühle:**

| U min$^{-1}$ | 1000 |
|---|---|
| Mahlperlen Ø mm | 1,2-1,4 |
| Füllgrad Perlen (%) | 80 |
| Kühlung | an |
| Mahlgut-Temperatur (°C) | 58 |

**Kennwerte ZBEC-Pulver:**

| Schwefel ges. (%) | 21,6 |
|---|---|
| Asche (%) | 14,0 |
| Siebrückstand naß (%) 63 $\mu$m | 17,7 |

**Beispiel Einmischversuche:**

| Rezeptur Prüfbatch rot: | NR SMR 5CV50 | 30 Tle |
|---|---|---|
| | SBR 1712 | 70 Tle |
| | Bayferrox 720 N | 0,9 Tle |

| Prüfbatch rot: | I | II |
|---|---|---|
| ZBEC Pulver | 275 g | 275 g |
| ZBEC/Weichmacher 50/50 | 75 g | - |
| (50/50 gemahlen) | - g | 75 g |

Einmischzeit 7 min auf Laborwalzwerk.
Auswertung auf Stippen: Vormischung I und II
Schnittfläche 40 cm$^2$ mit Mikroskop bei 40-facher Vergrößerung.

| Teilchengröße | Anzahl/40cm² | |
|---|---|---|
| | I | II |
| > 75 - 100 μm | n.z | 0 |
| >100-150 μm | n.z | 0 |
| >100-250 μm | n.z | 0 |
| >250 μm | 19 | 0 |
| | (bis 525 μm) | |
| n.z. = große Zahl von Teilchen nicht zählbar | | |

**Teilchengrößenbestimmung prozentuale Verteilung der Teilchen**

## Optische Auswertung mit Mikroskop

| | -2 | -5 | -10 | -20 | -30 | -40 | -50 | -60 | -80 | -100 | -200 | -500 | -1000 | -2000 μm |
|---|---|---|---|---|---|---|---|---|---|---|---|---|---|---|
| ZBEC-Pulver aufgeschlämmt im Weichmacher | 10 | 10 | 20 | 25 | 8 | 6 | 3 | 3 | 3 | 4 | 3 | 3 | 2 | 1 |
| Abmischung nach Dissolver | 10 | 10 | 20 | 25 | 8 | 6 | 2 | 2 | 4 | 4 | 4 | 2 | 2 | 1 |
| Abmischung nach Mahlung | 50 | 23 | 25 | 1 | 1 | - | - | - | - | - | - | - | - | - |

**Beispiel 3**

| Rizinusöl | 15 Tle. |
|---|---|
| Dioctyladipat (DOA) | 30 Tle. |
| Mahlschwefel | 50 Tle. |

Das Mahlschwefel-Pulver wird mit einem Dissolver in das Weichmachergemisch Rizinusöl/DOA eingemischt. Die vorliegende Paste wird in einer Perlmühle vermahlen.

**Parameter Dissolver:**

| U min⁻¹ | 3265 |
|---|---|
| End-Temperatur (°C) | 28 |
| Einmischzeit (min) | 5 |

**Parameter Perlmühle:**

| | |
|---|---|
| U min$^{-1}$ | 1000 |
| Mahlperlen Ø mm | 1,2-1,4 |
| Füllgrad Perlen (%) | 80 |
| Kühlung | an |
| Mahlgut-Temperatur (°C) | 58 |

**Kennwerte Mahlschwefel:**

| | |
|---|---|
| Schwefel ges. (%) | 99,80 |
| Asche (%) | 0,00 |
| Siebrückstand naß 63 (%) μm | 9 |

**Teilchengrößenbestimmung prozentuale Verteilung der Teilchen**

## Optische Auswertung mit Mikroskop

| | -2 | -5 | -10 | -20 | -30 | -40 | -50 | -60 | -70 | -80 | -90 | -100 | -200 | -500 | -1000 | -2000 μm |
|---|---|---|---|---|---|---|---|---|---|---|---|---|---|---|---|---|
| Schwefel-Pulver aufgeschlämmt im Weichmacher | 2 | 5 | 10 | 10 | 10 | 10 | 10 | 8 | 6 | 5 | 4 | 3 | 2 | 1 | 1 | 1 |
| Abmischung nach Dissolver | 2 | 5 | 10 | 20 | 10 | 10 | 10 | 8 | 6 | 5 | 5 | 3 | 2 | 2 | 2 | - |
| Abmischung nach Mahlung | 10 | 25 | 20 | 13 | 12 | 9 | 1 | - | - | - | - | - | - | - | - | - |

**Beispiel 4**

| | |
|---|---|
| Dibenzothiazyldisulfid Pulver (MBTS) | 50 Tle. |
| Weichmacher Mesamoll (Alkylsulfonsäureester des Phenols) | 50 Tle. |

Das MBTS-Pulver wird mit einem Dissolver in das Mesamoll eingemischt. Die vorliegende Paste wird in einer Perlmühle vermahlen.

**Parameter Dissolver:**

| | |
|---|---|
| U min$^{-1}$ | 3265 |
| End-Temperatur (°C) | 23 |
| Einmischzeit (min) | 5 |

**Parameter Perlmühle:**

| U min$^{-1}$ | 1000 |
|---|---|
| Mahlperlen Ø mm | 1,2-1,4 |
| Füllgrad Perlen (%) | 80 |
| Kühlung | an |
| Mahlgut-Temperatur (°C) | 65 |

**Beispiel Einmischversuche:**

| Rezeptur Prüfbatch rot | NR SMR 5 CV 50 | 30 Tle. |
|---|---|---|
| | SBR 1712 | 70 Tle. |
| | Eisenoxid $Fe_2O_3$ (Bayferrox 720 N) | 0,9 Tle. |

| | I | II | III |
|---|---|---|---|
| Prüfbatch rot | 275 g | 275 g | 275 g |
| MBTS Pulver | 75 g | - | - |
| MBTS/Weichmacher Abmischung 1:1 | - | 75 g | - |
| MBTS-Batch, 80%ig in Elastomer | - | - | 75 g |

Auswertung auf Stippen: Prüfbatch I, II, III
Schnittfläche 40 cm$^2$ mit Mikroskop bei 40-facher Vergrößerung

| Teilchengröße | Anzahl Teilchen/40 cm/$^2$ | | |
|---|---|---|---|
| | I | II | III |
| >40-75 $\mu$m | n.z. | 0 | 42 |
| >75-100 $\mu$m | 12 | 0 | 22 |
| >100-250 $\mu$m | 2 | 0 | 18 |
| >250 $\mu$m | 0 | 0 | 1(475 $\mu$m) |
| n.z. = große Zahl von Teilchen nicht zählbar | | | |

EP 0 654 498 A2

**Teilchengrößenbestimmung prozentuale Verteilung der Teilchen**

## Optische Auswertung mit Mikroskop

|  | -2 | -5 | -10 | -20 | -30 | -40 | -50 | -60 | -70 | -80 | -100 | >100 μm |
|---|---|---|---|---|---|---|---|---|---|---|---|---|
| MBTS Pulver aufgeschlämmt im Weichmacher | 78 | 14 | 4 | 3 | 1 | 1 | - | - | - | - | - | - |
| Abmischung nach Dissolver | 82 | 10 | 5 | 2 | 1 | - | - | - | - | - | - | - |
| Abmischung nach Mahlung | 88 | 10 | 1 | 1 | - | - | - | - | - | - | - | - |

### Patentansprüche

1. Kautschukchemikalienzubereitung, bestehend aus oder enthaltend Kautschukchemikalien in feinverteilter Form und eine Trägerflüssigkeit, worin die Kautschukchemikalienteilchen einen mittleren Durchmesser (Gewichtsmittel $d_{50}$) von 2 μm bis 20 μm, vorzugsweise <10 μm, besitzen und eine Teilchendurchmesserverteilung entsprechend $\delta d_{10}$-$d_{90}$< = 20 μm, vorzugsweise <10 μm, aufweisen.

2. Verfahren zur Herstellung der Kautschukchemikalienzubereitungen gemäß Anspruch 1, dadurch gekennzeichnet, daß man Kautschukchemikalien und Trägerflüssigkeit mischt und die Mischung vermahlt.

3. Verfahren nach Anspruch 2, dadurch gekennzeichnet, daß durch die Zerkleinerung, gleichmäßige Dispergierung und Bedeckung der Pulverteilchen eine Reagglomeration der Teilchen bei der Lagerung und Einarbeitung der Kautschukchemikalien verhindert wird.

4. Verfahren nach Ansprüchen 2 und 3, dadurch gekennzeichnet, daß die Anpastung keine Teilchen >50 μm, vorzugsweise >30 μm, enthält.

8